# EUROPÄISCHE PATENTANMELDUNG

(11) **EP 1 931 023 A1**
(43) Veröffentlichungstag der Anmeldung: **11.06.2008**
(21) Anmeldenummer: 06405506.4
(22) Anmeldetag: 06.12.2006
(51) Int. Cl.: H02M 7/08

(54) **Gleichstromversorgungssystem**

(71) Anmelder: ABB Schweiz AG, 5400 Baden (CH)
(72) Erfinder: Suh, Yongsug, 5417 Untersiggenthal (CH); Steimer, Petr, 5420 Ehrendingen (CH)
(74) Vertreter: ABB Patent Attorneys

(57) **Zusammenfassung**

Es wird ein Gleichstromversorgungssystem mit einem ersten Transformator (1) und einem zweiten Transformator (2) angegeben, wobei die beiden Transformatoren (1, 2) primärseitig miteinander verbunden sind und eine mit der Sekundärseite des ersten Transformators (1) verbundenen ersten Umrichtereinheit (3, 3.1, ...3.n) und eine mit der Sekundärseite des zweiten Transformators (2) verbundenen zweiten Umrichtereinheit (4, 4.1, ...4.p) vorgesehen ist und jede Umrichtereinheit (3, 3.1, ...3.n, 4, 4.1, ...4.p) einen wechselspannungsseitig mit der Sekundärwicklung des zugehörigen Transformators (1, 2) verbundenen Gleichrichter (5) aufweist. Zur Bereitstellung einer nahezu beliebigen Gleichspannung und eines dementsprechend beliebigen Gleichstromes weist jede Umrichtereinheit (3, 3.1, ...3.n, 4, 4.1, ...4.p) einen gleichspannungsseitig mit dem Gleichrichter (5) verbundenen Gleichspannungskreis (6) und einen Tiefsetzsteller zur Schaltung von drei Schaltspannungsniveaus (7) auf, welcher Tiefsetzsteller (7) mit dem Gleichspannungskreis (6) verbunden ist und die Tiefsetzsteller (7) der Umrichtereinheiten (3, 3.1, ...3.n, 4, 4.1, ...4.p) ausgangsseitig miteinander verbunden sind.

## Beschreibung

### Technisches Gebiet

Die Erfindung bezieht sich auf das Gebiet der Leistungselektronik. Sie geht aus von einem Gleichstromversorgungssystem gemäss dem Oberbegriff des unabhängigen Anspruchs.

### Stand der Technik

Heute werden in vielen Anwendungen vor allem in der Industrie Gleichstromversorgungssysteme eingesetzt. Beispielsweise bei der chemischen Elektrolyse sowie bei Metallschmelzen und bei der Metallgewinnung sind sehr hohe Gleichströme notwendig, welche dann ein Gleichstromversorgungssystem bereitstellen kann. Ein solches Gleichstromversorgungssystem umfasst dazu typischerweise einen ersten Transformator und einen zweiten Transformator, wobei die beiden Transformatoren primärseitig miteinander verbunden sind und die verbundenen Transformatoren an ein gemeinsames elektrisches Wechselspannungsnetz angeschlossen sind. Weiterhin ist eine mit der Sekundärseite des ersten Transformators verbundene erste Umrichtereinheit und eine mit der Sekundärseite des zweiten Transformators verbundene zweite Umrichtereinheit vorgesehen, wobei jede Umrichtereinheit einen wechselspannungsseitig mit der Sekundärwicklung des zugehörigen Transformators verbundenen Gleichrichter aufweist, aus welchen Gleichrichtern dann die entsprechende elektrische Last gespeist werden kann. Typischerweise ist der Gleichrichter als gesteuerter Thyristorgleichrichter ausgebildet, damit die Gleichspannung und vor allem der Gleichstrom zur Speisung der elektrischen Last eingestellt werden kann.

Problematisch bei einem vorstehend genannten Gleichstromversorgungssystem ist, dass durch das Herunterspannen der Spannung durch den jeweiligen Transformator zwar ein höher Strom an der Sekundärseite des jeweiligen Transformators bei gleicher Leistung fliesst, der zugehörige Thyristorgleichrichter aber bei einem entsprechend hohen Strom systembedingt seine gewünschte Tiefsetzfunktion bzgl. der gleichgerichteten Spannung der Sekundärseite und damit eine weitere Erhöhung des Stromes nicht oder nur sehr bedingt ausführen kann. Eine beliebige und variable Einstellung bzw. Anpassung der Gleichspannung und vor allem des Gleichstromes zur Speisung der elektrischen Last ist damit nicht möglich.

### Darstellung der Erfindung

Aufgabe der Erfindung ist es deshalb, ein Gleichstromversorgungssystem anzugeben, mit welchem eine nahezu beliebige Gleichspannung und ein dementsprechend beliebiger Gleichstrom, insbesondere zur Speisung einer elektrischen Last, bereitgestellt werden kann. Diese Aufgabe wird durch die Merkmale des Anspruchs 1 gelöst. In den abhängigen Ansprüchen sind vorteilhafte Weiterbildungen der Erfindung angegeben.

Das erfindungsgemässe Gleichstromversorgungssystem umfasst einen ersten Transformator und einen zweiten Transformator, wobei die beiden Transformatoren primärseitig miteinander verbunden sind. Mit der Sekundärseite des ersten Transformators ist ferner eine erste Umrichtereinheit verbunden und mit der Sekundärseite des zweiten Transformators ist eine zweite Umrichtereinheit verbunden, wobei jede Umrichtereinheit einen wechselspannungsseitig mit der Sekundärwicklung des zugehörigen Transformators verbundenen Gleichrichter aufweist. Erfindungsgemäss weist jede Umrichtereinheit einen gleichspannungsseitig mit dem Gleichrichter verbundenen Gleichspannungskreis und einen Tiefsetzsteller zur Schaltung von drei Schaltspannungsniveaus auf, welcher Tiefsetzsteller mit dem Gleichspannungskreis verbunden ist. Darüber hinaus sind die Tiefsetzsteller der Umrichtereinheiten ausgangsseitig miteinander verbunden. Mittels der miteinander verbundenen Tiefsetzsetzsteller der Umrichtereinheiten lässt sich die Gleichspannung und der Gleichstrom ausgangsseitig an den miteinander verbundenen Tiefsetzsetzstellern beispielsweise zur Speisung einer elektrischen Last mit Vorteil nahezu beliebig einstellen. Die Tiefsetzsteller zur Schaltung von drei Schaltspannungsniveaus haben zudem den Vorteil, dass die Einstellmöglichkeiten der Gleichspannung und des Gleichstromes mittels der Tiefsetzfunktion des einzelnen Tiefsetzstellers zur Schaltung von drei Schaltspannungsniveaus in einem äusserst breiten Wertebereich erfolgen kann, wodurch die elektrische Last optimal und bedarfbezogen gespeist werden kann. Darüber hinaus kann aufgrund des breiten und nach Bedarf einstellbaren Wertebereichs der Tiefsetzsteller die Belastung der Sekundärseiten der Transformatoren durch einen hohen Strom reduziert werden, wodurch die Transformatoren weniger belastet werden und demzufolge eine höhere Verfügbarkeit und Lebensdauer aufweisen. Da in der bereitgestellten Gleichspannung und im Gleichstrom eines jeden Tiefsetzstellers aufgrund der Schaltvorgänge ihrer Tiefsetzfunktion Wechselanteile (Rippel) auftreten können, können die Tiefsetzsteller derart mit einer einstellbaren Phasenverschiebung zueinander bezüglich der entsprechenden Wechselanteile betrieben werden, dass der bereitgestellte Gesamtgleichstrom der Tiefsetzsteller keine oder zumindest nur noch geringe Wechselanteile enthält. Ein Ausgangsfilter lässt sich damit vorteilhaft vermeiden oder zumindest entsprechend klein dimensionieren und die elektrische Last wird weniger mit solchen Wechselanteilen belastet.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine erste Ausführungsform eines erfindungsgemässen Gleichstromversorgungssystems,
- Fig. 2: eine zweite Ausführungsform eines erfindungsgemässen Gleichstromversorgungssystems,
- Fig. 3: eine dritte Ausführungsform eines erfindungsgemässen Gleichstromversorgungssystems,
- Fig. 4: eine Ausführungsform eines Tiefsetzstellers des erfindungsgemässen Gleichstromversorgungssystems und
- Fig. 5: eine weitere Ausführungsform eines Tiefsetzstellers des erfindungsgemässen Gleichstromversorgungssystems.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

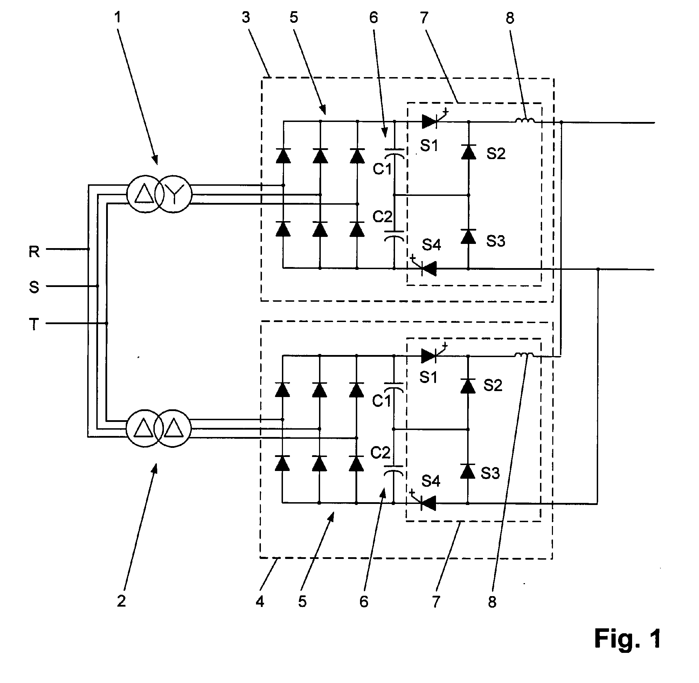

In Fig. 1 ist eine erste Ausführungsform eines erfindungsgemässen Gleichstromversorgungssystems gezeigt. Gemäss Fig. 1 umfasst das Gleichstromversorgungssystem einen ersten Transformator 1 und einen zweiten Transformator 2, wobei die beiden Transformatoren 1, 2 primärseitig miteinander verbunden sind. Weiterhin ist ein erste Umrichtereinheit 3, 3.1, ...3.n mit der Sekundärseite des ersten Transformators 1 verbunden und eine zweite Umrichtereinheit 4, 4.1, ...4.p ist mit der Sekundärseite des zweiten Transformators 2 verbunden, wobei jede Umrichtereinheit 3, 3.1, ...3.n, 4, 4.1, ...4.p einen wechselspannungsseitig mit der Sekundärwicklung des zugehörigen Transformators 1, 2 verbundenen Gleichrichter 5 aufweist. Erfindungsgemäss weist nun jede Umrichtereinheit 3, 3.1, ...3.n, 4, 4.1, ...4.p einen gleichspannungsseitig mit dem Gleichrichter 5 verbundenen Gleichspannungskreis 6 und einen Tiefsetzsteller zur Schaltung von drei Schaltspannungsniveaus 7 auf, welcher Tiefsetzsteller 7 mit dem Gleichspannungskreis 6 verbunden ist, wobei die Tiefsetzsteller 7 der Umrichtereinheiten 3, 3.1, ...3.n, 4, 4.1, ...4.p ausgangsseitig miteinander verbunden sind. Mittels der miteinander verbundenen Tiefsetzsetzsteller 7 der Umrichtereinheiten 3, 3.1, ...3.n, 4, 4.1, ...4.p lässt sich die Gleichspannung und der Gleichstrom ausgangsseitig an den miteinander verbundenen Tiefsetzsetzstellern 7 beispielsweise zur Speisung einer elektrischen Last mit Vorteil nahezu beliebig einstellen. Die Tiefsetzsteller 7 zur Schaltung von drei Schaltspannungsniveaus haben zudem den Vorteil, dass die Einstellmöglichkeiten der Gleichspannung und des Gleichstromes mittels der Tiefsetzfunktion des einzelnen Tiefsetzstellers 7 zur Schaltung von drei Schaltspannungsniveaus in einem äusserst breiten Wertebereich erfolgen kann, wodurch die elektrische Last optimal und bedarfbezogen gespeist werden kann. Darüber hinaus kann aufgrund des breiten und nach Bedarf einstellbaren Wertebereichs der Tiefsetzsteller 7 die Belastung der Sekundärseiten der Transformatoren 1, 2 durch einen hohen Strom reduziert werden, wodurch die Transformatoren 1, 2 weniger belastet werden und demzufolge eine höhere Verfügbarkeit und Lebensdauer aufweisen. Da in der bereitgestellten Gleichspannung und im Gleichstrom eines jeden Tiefsetzstellers 7 aufgrund der Schaltvorgänge ihrer Tiefsetzfunktion Wechselanteile (Rippel) auftreten können, können die Tiefsetzsteller 7 derart mit einer einstellbaren Phasenverschiebung zueinander bezüglich der entsprechenden Wechselanteile betrieben werden, dass der bereitgestellte Gesamtstrom der Tiefsetzsteller 7 keine oder zumindest nur noch geringe Wechselanteile enthält. Ein Ausgangsfilter lässt sich damit vorteilhaft vermeiden oder zumindest entsprechend klein dimensionieren und ausgangsseitig verbundene und gespeiste elektrische Last wird weniger mit solchen Wechselanteilen belastet. Aufgrund der bereits erwähnten vorteilhaften Einstellmöglichkeiten der Tiefsetzsteller 7 kann der jeweilige Gleichrichter 5 als einfacher und damit sehr robuster Diodengleichrichter ausgebildet werden, wie beispielhaft in Fig. 1 gezeigt. Denkbar ist aber nachwievor jedwede Art von Gleichrichtern.

Vorzugsweise sind die die Transformatoren 1, 2, wie in Fig. 1 beispielhaft gezeigt, primärseitig parallel miteinander verbunden. Die primärseitigen Wicklungen der Transformatoren 1, 2 weisen dabei zum Beispiel dieselbe Verschaltungsart auf, insbesondere wie in Fig. 1 gezeigt eine Dreieckschaltung, und die sekundärseitigen Wicklungen der Transformatoren 1, 2 weisen dann unterschiedliche Verschaltungsarten auf, insbesondere wie in Fig. 1 gezeigt der erste Transformator 1 eine Sternschaltung und der zweite Transformator 2 eine Dreieckschaltung. Vorteilhaft kann dadurch eine einseitige Belastung eines mit den Transformatoren 1, 2 verbundenen elektrischen Wechselspannungsnetzes vermieden werden und unerwünschte Wechselanteile in der Spannung des elektrischen Wechselspannungsnetzes reduziert werden. In Fig. 1 ist beispielhaft eine Verbindung der Transformatoren 1, 2 zu einem elektrischen Wechselspannungsnetz mit drei Phasen R, S, T dargestellt.

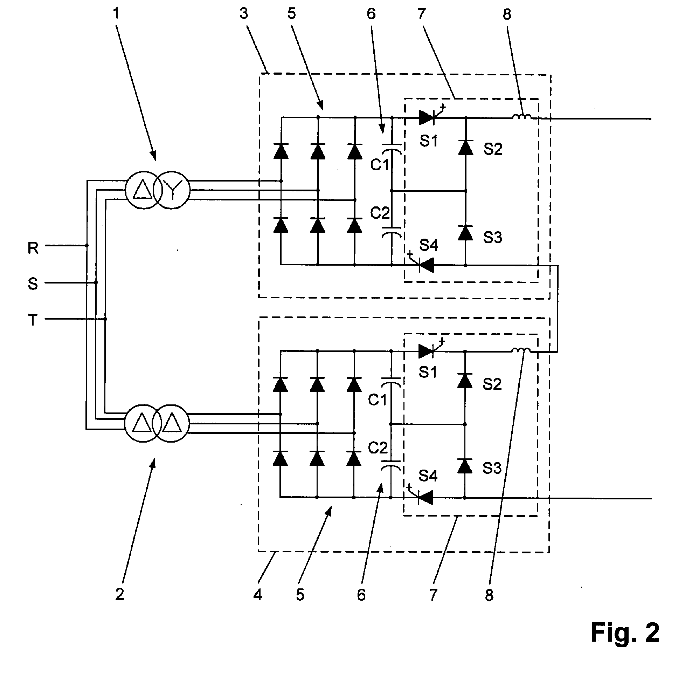

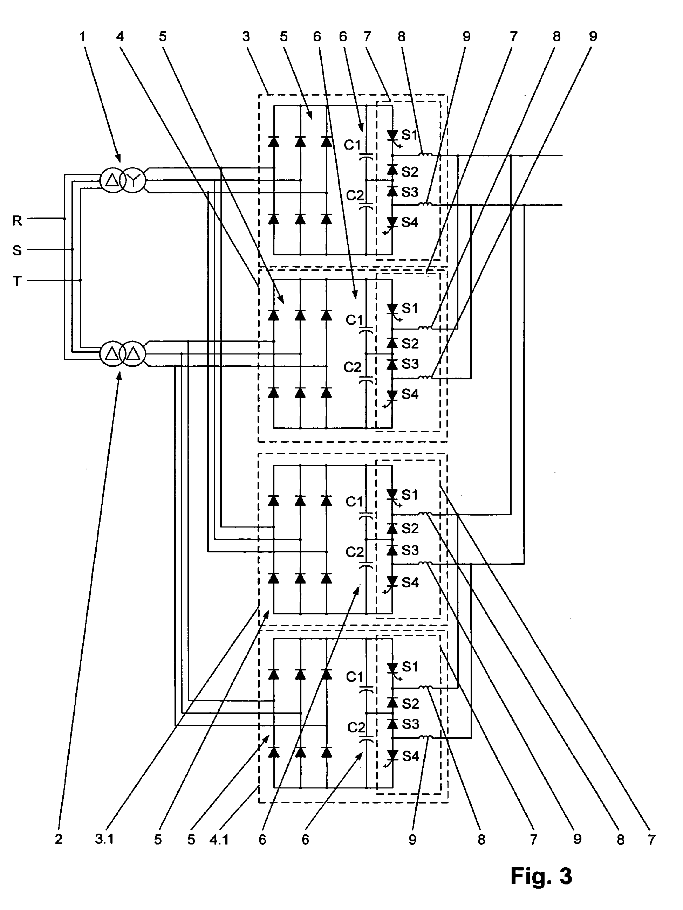

Allgemein ist es denkbar, dass n weitere erste Umrichtereinheiten 3.1, ...3.n mit der Sekundärseite des ersten Transformators 1 verbunden sind, wobei n ≥ 1 ist. Weiterhin besteht auch die Möglichkeit, dass p weitere zweite Umrichtereinheiten 4.1, ...4.p mit der Sekundärseite des zweiten Transformators 2 verbunden sind, wobei dann p ≥ 1 ist. In einer dritten Ausführungsform des erfindungsgemässen Gleichstromversorgungssystems gemäss Fig. 3 ist beispielhaft dazu der Fall mit n=1 weiteren ersten Umrichtereinheiten 3.1 und p=1 weiteren zweiten Umrichtereinheiten 4.1 dargestellt. Gemäss Fig. 1 und Fig. 3 sind die Tiefsetzsteller 7 der Umrichtereinheiten 3, 3.1, ...3.n, 4, 4.1, ...4.p ausgangsseitig parallel geschaltet, wodurch sich der ausgangsseitige Gleichstrom beispielsweise zur Speisung einer elektrischen Last vorteilhaft erhöhen lässt. Es ist aber auch denkbar, wie beispielhaft in einer zweiten Ausführungsform des erfindungsgemässen Gleichstromversorgungssystems gemäss Fig. 2 gezeigt, dass die Tiefsetzsteller 7 der Umrichtereinheiten 3, 3.1, ...3.n, 4, 4.1, ...4.p ausgangsseitig seriell geschaltet sind. Durch eine solche Serienschaltung lässt sich die ausgangsseitige Gleichspannung beispielsweise zur Speisung einer elektrischen Last vorteilhaft erhöhen.

Gemäss Fig. 1 bis Fig. 3 weist der Tiefsetzsteller 7 zur Schaltung von drei Schaltspannungsniveaus bei jeder Umrichtereinheit 3, 3.1, ...3.n, 4, 4.1, ...4.p einen ersten ansteuerbaren unidirektionalen Leistungshalbleiterschalter mit gesteuerter unidirektionaler Stromführungsrichtung S1, einen zu dem ersten ansteuerbaren unidirektionalen Leistungshalbleiterschalter mit gesteuerter unidirektionaler Stromführungsrichtung S1 antiseriell geschalteten ersten passiven nicht ansteuerbaren Leistungshalbleiterschalter mit unidirektionaler Stromführungsrichtung S2, einen zu dem ersten passiven nicht ansteuerbaren Leistungshalbleiterschalter mit unidirektionaler Stromführungsrichtung S2 seriell geschalteten zweiten passiven nicht ansteuerbaren Leistungshalbleiterschalter mit unidirektionaler Stromführungsrichtung S3 und einen zu dem zweiten passiven nicht ansteuerbaren Leistungshalbleiterschalter mit unidirektionaler Stromführungsrichtung S3 antiseriell geschalteten zweiten ansteuerbaren unidirektionalen Leistungshalbleiterschalter mit gesteuerter unidirektionaler Stromführungsrichtung S4 auf. Der jeweilige Tiefsetzsteller 7 zur Schaltung von drei Schaltspannungsniveaus ist damit unkompliziert aufgebaut und demnach sehr einfach zu realisieren.

Vorzugsweise ist der erste und zweite ansteuerbare unidirektionale Leistungshalbleiterschalter mit gesteuerter unidirektionaler Stromführungsrichtung S1, S4 jeweils als Abschaltthyristor ausgebildet, wobei als Abschaltthyristor wiederum ein integrierter über die Ansteuerelektrode kommutierter Thyristor (IGCT - Integrated Gate-Commutated Thyristor) oder ein Gate Turn-Off Thyristor (GTO) von Vorteil ist, da diese Bauelemente besonders geringe Wirkleistungsverluste bei gleichzeitig hoher Robustheit, vor allem bei hohen Spannungen und insbesondere bei Überspannungen, aufweisen. Es ist aber auch denkbar, den ersten und zweiten ansteuerbaren unidirektionalen Leistungshalbleiterschalter mit gesteuerter unidirektionaler Stromführungsrichtung S1, S4 jeweils als einen Bipolartransistor mit isoliert angeordneter Ansteuerelektrode (IGBT - Insulated Gate Bipolartransistor) oder als einen Leistungs-MOSFET auszubilden, da sich diese Bauelemente durch ein hohe Schaltfrequenz und damit durch geringe Welligkeit im Strom und in der Spannung auszeichnen. Ferner ist der erste und zweite passive nicht ansteuerbare Leistungshalbleiterschalters mit unidirektionaler Stromführungsrichtung S2, S3 vorzugsweise jeweils als eine Diode ausgebildet.

Gemäss Fig. 1 bis Fig. 3 weist der Gleichspannungskreis 6 bei jeder Umrichtereinheit 3, 3.1, ...3.n, 4, 4.1, ...4.p einen ersten kapazitiven Energiespeicher C1 und einen zu dem ersten kapazitiven Energiespeicher C1 in Serie geschalteten zweiten kapazitiven Energiespeicher C2 auf. Ferner ist bei jedem Tiefsetzsteller 7 zur Schaltung von drei Schaltspannungsniveaus der erste ansteuerbare unidirektionale Leistungshalbleiterschalter mit gesteuerter unidirektionaler Stromführungsrichtung S1 mit dem ersten kapazitiven Energiespeicher C1 verbunden, der Verbindungspunkt des ersten passiven nicht ansteuerbaren Leistungshalbleiterschalters mit unidirektionaler Stromführungsrichtung S2 mit dem zweiten passiven nicht ansteuerbaren Leistungshalbleiterschalter mit unidirektionaler Stromführungsrichtung S3 mit dem Verbindungspunkt des ersten kapazitiven Energiespeichers C1 mit dem zweiten kapazitiven Energiespeicher C2 verbunden und der zweite ansteuerbare unidirektionale Leistungshalbleiterschalter mit gesteuerter unidirektionaler Stromführungsrichtung S4 mit dem zweiten kapazitiven Energiespeicher C2 verbunden. Es sei erwähnt, dass zur Erhöhung des Gleichstromes am Ausgang des Tiefsetzstellers 7 einer Umrichtereinheit 3, 4 mindestens eine weitere Schaltung der vorstehend beschriebenen Schaltung aus den Leistungsschaltern S1, S2, S3, S4 in der vorstehend beschriebenen Weise mit dem ersten kapazitiven Energiespeicher C1 und dem zweiten kapazitiven Energiespeicher C2 verbunden ist und sämtliche Schaltungen aus den Leistungsschaltern S1, S2, S3, S4 dann an den Verbindungspunkten der jeweiligen ersten ansteuerbaren unidirektionalen Leistungshalbleiterschalter mit gesteuerter unidirektionaler Stromführungsrichtung S1 mit den ersten passiven nicht ansteuerbaren Leistungshalbleiterschaltern mit unidirektionaler Stromführungsrichtung S2 und an den Verbindungspunkten der jeweiligen zweiten passiven nicht ansteuerbaren Leistungshalbleiterschalter mit unidirektionaler Stromführungsrichtung S3 mit den zweiten ansteuerbaren unidirektionalen Leistungshalbleiterschaltern mit gesteuerter unidirektionaler Stromführungsrichtung S4 parallel miteinander verbunden sind.

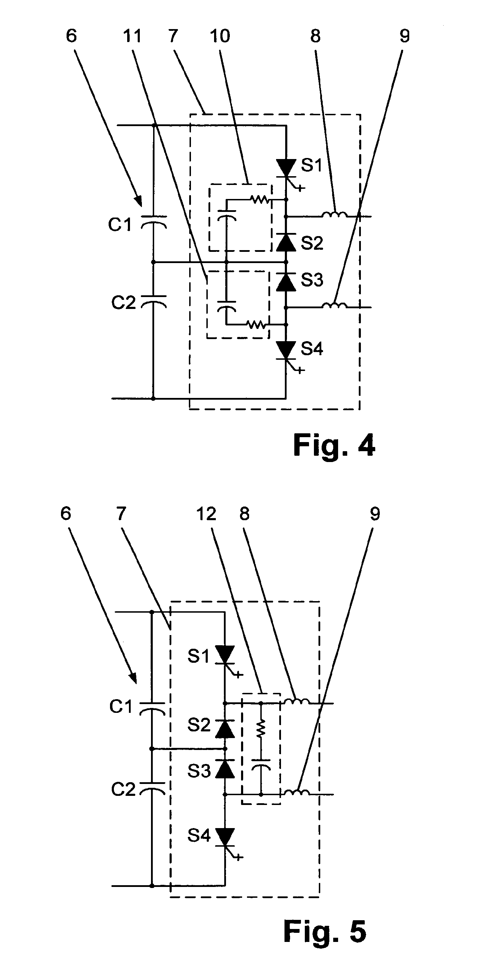

In Fig. 4 ist eine Ausführungsform eines Tiefsetzstellers 7 des erfindungsgemässen Gleichstromversorgungssystems gezeigt. Darin ist ein erstes Entlastungsnetzwerk 10 mit dem Verbindungspunkt des ersten ansteuerbaren unidirektionalen Leistungshalbleiterschalters mit gesteuerter unidirektionaler Stromführungsrichtung S1 mit dem ersten passiven nicht ansteuerbaren Leistungshalbleiterschalter mit unidirektionaler Stromführungsrichtung S2 und mit dem Verbindungspunkt des ersten passiven nicht ansteuerbaren Leistungshalbleiterschalters mit unidirektionaler Stromführungsrichtung S2 mit dem zweiten passiven nicht ansteuerbaren Leistungshalbleiterschalter mit unidirektionaler Stromführungsrichtung S3 verbunden. Weiterhin ist ein zweites Entlastungsnetzwerk 11 mit dem Verbindungspunkt des zweiten passiven nicht ansteuerbaren Leistungshalbleiterschalters mit unidirektionaler Stromführungsrichtung S3 mit dem zweiten ansteuerbaren unidirektionalen Leistungshalbleiterschalter mit gesteuerter unidirektionaler Stromführungsrichtung S4 und mit dem Verbindungspunkt des ersten passiven nicht ansteuerbaren Leistungshalbleiterschalters mit unidirektionaler Stromführungsrichtung S2 mit dem zweiten passiven nicht ansteuerbaren Leistungshalbleiterschalter mit unidirektionaler Stromführungsrichtung S3 verbunden. Das erste und zweite Entlastungsnetzwerk 10, 11 bewirkt, dass der Stromgradient di/dt beim Abschalten des jeweiligen passiven nicht ansteuerbaren Leistungshalbleiterschalters mit unidirektionaler Stromführungsrichtung S2, S3 begrenzt wird und somit vorteilhaft vor einer Beschädigung oder gar Zerstörung geschützt wird. Darüber hinaus können vorteilhaft thermische Verluste reduziert werden. Ausgebildet ist das jeweilige Entlastungsnetzwerk 10, 11 als Serienschaltung eines Kondensators mit einem Widerstand.

In Fig. 5 ist eine weitere Ausführungsform eines Tiefsetzstellers 7 des erfindungsgemässen Gleichstromversorgungssystems gezeigt. Darin ist alternativ zu Fig. 4 ein Entlastungsnetzwerk 12 mit dem Verbindungspunkt des ersten ansteuerbaren unidirektionalen Leistungshalbleiterschalters mit gesteuerter unidirektionaler Stromführungsrichtung S1 mit dem ersten passiven nicht ansteuerbaren Leistungshalbleiterschalter mit unidirektionaler Stromführungsrichtung S2 und mit dem Verbindungspunkt des zweiten passiven nicht ansteuerbaren Leistungshalbleiterschalters mit unidirektionaler Stromführungsrichtung S3 mit dem zweiten ansteuerbaren unidirektionalen Leistungshalbleiterschalter mit gesteuerter unidirektionaler Stromführungsrichtung S4 verbunden. Das Entlastungsnetzwerk 12 gemäss Fig. 5 bewirkt ebenfalls, dass der Stromgradient di/dt beim Abschalten des jeweiligen passiven nicht ansteuerbaren Leistungshalbleiterschalters mit unidirektionaler Stromführungsrichtung S2, S3 begrenzt wird und somit vorteilhaft vor einer Beschädigung oder gar Zerstörung geschützt wird. Darüber hinaus können vorteilhaft ebenfalls thermische Verluste reduziert werden. Ausgebildet ist das jeweilige Entlastungsnetzwerk 12 als Serienschaltung eines Kondensators mit einem Widerstand. Das Entlastungsnetzwerk 12 nach Fig. 5 stellt gegenüber den beiden Entlastungsnetzwerken 10, 11 gemäss Fig. 4 eine radikale Vereinfachung bezüglich Platz, Bauteileaufwand und damit Kosten dar, da lediglich nur noch ein einziges Entlastungsnetzwerk 12 für die beiden Leistungshalbleiterschalter S2, S3 notwendig ist.

Gemäss Fig. 1 ist bei jedem Tiefsetzsteller 7 eine Tiefsetzstellerausgangsinduktivität 8 mit dem Verbindungspunkt des ersten ansteuerbaren unidirektionalen Leistungshalbleiterschalters mit gesteuerter unidirektionaler Stromführungsrichtung S1 mit dem ersten passiven nicht ansteuerbaren Leistungshalbleiterschalter mit unidirektionaler Stromführungsrichtung S2 verbunden. Zur bereits erwähnten ausgangsseitigen Parallelschaltung der Tiefsetzsteller 7 der Umrichtereinheiten 3, 3.1, ...3.n, 4, 4.1, ...4.p sind die Tiefsetzsteller 7 der Umrichtereinheiten 3, 3.1, ...3.n, 4, 4.1, ...4.p an den Tiefsetzstellerausgangsinduktivitäten 8 und an den Verbindungspunkten der jeweiligen zweiten passiven nicht ansteuerbaren Leistungshalbleiterschalter mit unidirektionaler Stromführungsrichtung S3 mit den zweiten ansteuerbaren unidirektionalen Leistungshalbleiterschaltern mit gesteuerter unidirektionaler Stromführungsrichtung S4 parallel miteinander verbunden. Zur bereits erwähnten ausgangsseitigen Serienschaltung der Tiefsetzsteller 7 der Umrichtereinheiten 3, 3.1, ...3.n, 4, 4.1, ...4.p sind die Tiefsetzsteller 7 der Umrichtereinheiten 3, 3.1, ...3.n, 4, 4.1, ...4.p an den Tiefsetzstellerausgangsinduktivitäten 8 mit den Verbindungspunkten der jeweiligen zweiten passiven nicht ansteuerbaren Leistungshalbleiterschalter mit unidirektionaler Stromführungsrichtung S3 mit den zweiten ansteuerbaren unidirektionalen Leistungshalbleiterschaltern mit gesteuerter unidirektionaler Stromführungsrichtung S4 seriell miteinander verbunden.

Gemäss Fig. 3 ist bei jedem Tiefsetzsteller 7 eine weitere Tiefsetzstellerausgangsinduktivität 9 mit dem Verbindungspunkt des zweiten passiven nicht ansteuerbaren Leistungshalbleiterschalters mit unidirektionaler Stromführungsrichtung S3 mit dem zweiten ansteuerbaren unidirektionalen Leistungshalbleiterschalter mit gesteuerter unidirektionaler Stromführungsrichtung S4 verbunden. Zur bereits erwähnten ausgangsseitigen Parallelschaltung der Tiefsetzsteller 7 der Umrichtereinheiten 3, 3.1, ...3.n, 4, 4.1, ...4.p sind die Tiefsetzsteller 7 der Umrichtereinheiten 3, 3.1, ...3.n, 4, 4.1, ...4.p an den Tiefsetzstellerausgangsinduktivitäten 8 und an den weiteren Tiefsetzstellerinduktivitäten 9 parallel miteinander verbunden. Zur bereits erwähnten ausgangsseitigen Serienschaltung der Tiefsetzsteller 7 der Umrichtereinheiten 3, 3.1, ...3.n, 4, 4.1, ...4.p sind die Tiefsetzsteller 7 der Umrichtereinheiten 3, 3.1, ...3.n, 4, 4.1, ...4.p ferner an den Tiefsetzstellerausgangsinduktivitäten 8 und an den weiteren Tiefsetzstellerinduktivitäten 9 seriell miteinander verbunden.

### Bezugszeichenliste

- 1: erster Transformator
- 2: zweiter Transformator
- 3: erste Umrichtereinheit
- 3.1, ...3.n: weitere erste Umrichtereinheiten
- 4: zweite Umrichtereinheit
- 4.1, ...4.p: weitere zweite Umrichtereinheiten
- 5: Gleichrichter
- 6: Gleichspannungskreis
- 7: Tiefsetzsteller
- 8: Tiefsetzstellerausgangsinduktivität
- 9: weitere Tiefsetzstellerausgangsinduktivität
- 10: erstes Entlastungsnetzwerk
- 11: zweites Entlastungsnetzwerk
- 12: Entlastungsnetzwerk

## Patentansprüche

1. Gleichstromversorgungssystem mit einem ersten Transformator (1) und einem zweiten Transformator (2), wobei die beiden Transformatoren (1, 2) primärseitig miteinander verbunden sind,
mit einer mit der Sekundärseite des ersten Transformators (1) verbundenen ersten Umrichtereinheit (3, 3.1, ...3.n),
mit einer mit der Sekundärseite des zweiten Transformators (2) verbundenen zweiten Umrichtereinheit (4, 4.1, ...4.p), wobei jede Umrichtereinheit (3, 3.1, ...3.n, 4, 4.1, ...4.p) einen wechselspannungsseitig mit der Sekundärwicklung des zugehörigen Transformators (1, 2) verbundenen Gleichrichter (5) aufweist,
**dadurch gekennzeichnet,**
**dass** jede Umrichtereinheit (3, 3.1, ...3.n, 4, 4.1, ...4.p) einen gleichspannungsseitig mit dem Gleichrichter (5) verbundenen Gleichspannungskreis (6) und einen Tiefsetzsteller zur Schaltung von drei Schaltspannungsniveaus (7) aufweist, welcher Tiefsetzsteller (7) mit dem Gleichspannungskreis (6) verbunden ist, und
**dass** die Tiefsetzsteller (7) der Umrichtereinheiten (3, 3.1, ...3.n, 4, 4.1, ...4.p) ausgangsseitig miteinander verbunden sind.

2. Gleichstromversorgungssystem nach Anspruch 1, **dadurch gekennzeichnet, dass** n weitere erste Umrichtereinheiten (3.1, ...3.n) mit der Sekundärseite des ersten Transformators (1) verbunden sind, wobei n ≥ 1 ist.

3. Gleichstromversorgungssystem nach Anspruch 1 oder 2, **dadurch gekennzeichnet, dass** p weitere zweite Umrichtereinheiten (4.1, ...4.p) mit der Sekundärseite des zweiten Transformators (2) verbunden sind, wobei p ≥ 1 ist.

4. Gleichstromversorgungssystem nach einem der Ansprüche 1 bis 3, **dadurch gekennzeichnet, dass** die Transformatoren (1, 2) primärseitig parallel miteinander verbunden sind.

5. Gleichstromversorgungssystem nach einem der Ansprüche 1 bis 4, **dadurch gekennzeichnet, dass** die Tiefsetzsteller (7) der Umrichtereinheiten (3, 3.1, ...3.n, 4, 4.1, ...4.p) ausgangsseitig parallel geschaltet sind.

6. Gleichstromversorgungssystem nach einem der Ansprüche 1 bis 4, **dadurch gekennzeichnet, dass** die Tiefsetzsteller (7) der Umrichtereinheiten (3, 3.1, ...3.n, 4, 4.1, ...4.p) ausgangsseitig seriell geschaltet sind.

7. Gleichstromversorgungssystem nach einem der Ansprüche 1 bis 4, **dadurch gekennzeichnet, dass** bei jeder Umrichtereinheit (3, 3.1, ...3.n, 4, 4.1, ...4.p) der Tiefsetzsteller (7) einen ersten ansteuerbaren unidirektionalen Leistungshalbleiterschalter mit gesteuerter unidirektionaler Stromführungsrichtung (S1), einen zu dem ersten ansteuerbaren unidirektionalen Leistungshalbleiterschalter mit gesteuerter unidirektionaler Stromführungsrichtung (S1) antiseriell geschalteten ersten passiven nicht ansteuerbaren Leistungshalbleiterschalter mit unidirektionaler Stromführungsrichtung (S2), einen zu dem ersten passiven nicht ansteuerbaren Leistungshalbleiterschalter mit unidirektionaler Stromführungsrichtung (S2) seriell geschalteten zweiten passiven nicht ansteuerbaren Leistungshalbleiterschalter mit unidirektionaler Stromführungsrichtung (S3) und einen zu dem zweiten passiven nicht ansteuerbaren Leistungshalbleiterschalter mit unidirektionaler Stromführungsrichtung (S3) antiseriell geschalteten zweiten ansteuerbaren unidirektionalen Leistungshalbleiterschalter mit gesteuerter unidirektionaler Stromführungsrichtung (S4) aufweist.

8. Gleichstromversorgungssystem nach Anspruch 7, **dadurch gekennzeichnet, dass** bei jeder Umrichtereinheit (3, 3.1, ...3.n, 4, 4.1, ...4.p) der Gleichspannungskreis (6) einen ersten kapazitiven Energiespeicher (C1.) und einen zu dem ersten kapazitiven Energiespeicher (C1) in Serie geschalteten zweiten kapazitiven Energiespeicher (C2) aufweist, dass der erste ansteuerbare unidirektionale Leistungshalbleiterschalter mit gesteuerter unidirektionaler Stromführungsrichtung (S1) mit dem ersten kapazitiven Energiespeicher (C1) verbunden ist,
dass der Verbindungspunkt des ersten passiven nicht ansteuerbaren Leistungshalbleiterschalters mit unidirektionaler Stromführungsrichtung (S2) mit dem zweiten passiven nicht ansteuerbaren Leistungshalbleiterschalter mit unidirektionaler Stromführungsrichtung (S3) mit dem Verbindungspunkt des ersten kapazitiven Energiespeichers (C1) mit dem zweiten kapazitiven Energiespeicher (C2) verbunden ist, und
dass der zweite ansteuerbare unidirektionale Leistungshalbleiterschalter mit gesteuerter unidirektionaler Stromführungsrichtung (S4) mit dem zweiten kapazitiven Energiespeicher (C2) verbunden ist.

9. Gleichstromversorgungssystem nach Anspruch 8, **dadurch gekennzeichnet, dass** ein erstes Entlastungsnetzwerk (10) mit dem Verbindungspunkt des ersten ansteuerbaren unidirektionalen Leistungshalbleiterschalters mit gesteuerter unidirektionaler Stromführungsrichtung (S1) mit dem ersten passiven nicht ansteuerbaren Leistungshalbleiterschalter mit unidirektionaler Stromführungsrichtung (S2) und mit dem Verbindungspunkt des ersten passiven nicht ansteuerbaren Leistungshalbleiterschalters mit unidirektionaler Stromführungsrichtung (S2) mit dem zweiten passiven nicht ansteuerbaren Leistungshalbleiterschalter mit unidirektionaler Stromführungsrichtung (S3) verbunden ist, und dass ein zweites Entlastungsnetzwerk (11) mit dem Verbindungspunkt des zweiten passiven nicht ansteuerbaren Leistungshalbleiterschalters mit unidirektionaler Stromführungsrichtung (S3) mit dem zweiten ansteuerbaren unidirektionalen Leistungshalbleiterschalter mit gesteuerter unidirektionaler Stromführungsrichtung (S4) und mit dem Verbindungspunkt des ersten passiven nicht ansteuerbaren Leistungshalbleiterschalters mit unidirektionaler Stromführungsrichtung (S2) mit dem zweiten passiven nicht ansteuerbaren Leistungshalbleiterschalter mit unidirektionaler Stromführungsrichtung (S3) verbunden ist.

10. Gleichstromversorgungssystem nach Anspruch 8, **dadurch gekennzeichnet, dass** ein Entlastungsnetzwerk (12) mit dem Verbindungspunkt des ersten ansteuerbaren unidirektionalen Leistungshalbleiterschalters mit gesteuerter unidirektionaler Stromführungsrichtung (S1) mit dem ersten passiven nicht ansteuerbaren Leistungshalbleiterschalter mit unidirektionaler Stromführungsrichtung (S2) und mit dem Verbindungspunkt des zweiten passiven nicht ansteuerbaren Leistungshalbleiterschalters mit unidirektionaler Stromführungsrichtung (S3) mit dem zweiten ansteuerbaren unidirektionalen Leistungshalbleiterschalter mit gesteuerter unidirektionaler Stromführungsrichtung (S4) verbunden ist.

11. Gleichstromversorgungssystem nach einem der Ansprüche 8 bis 10, **dadurch gekennzeichnet, dass** bei jedem Tiefsetzsteller (7) eine Tiefsetzstellerausgangsinduktivität (8) mit dem Verbindungspunkt des ersten ansteuerbaren unidirektionalen Leistungshalbleiterschalters mit gesteuerter unidirektionaler Stromführungsrichtung (S1) mit dem ersten passiven nicht ansteuerbaren Leistungshalbleiterschalter mit unidirektionaler Stromführungsrichtung (S2) verbunden ist.

12. Gleichstromversorgungssystem nach Anspruch 11, **dadurch gekennzeichnet, dass** die Tiefsetzsteller (7) der Umrichtereinheiten (3, 3.1, ...3.n, 4, 4.1, ...4.p) an den Tiefsetzstellerausgangsinduktivitäten (8) und an den Verbindungspunkten der jeweiligen zweiten passiven nicht ansteuerbaren Leistungshalbleiterschalter mit unidirektionaler Stromführungsrichtung (S3) mit den zweiten ansteuerbaren unidirektionalen Leistungshalbleiterschaltern mit gesteuerter unidirektionaler Stromführungsrichtung (S4) parallel miteinander verbunden sind.

13. Gleichstromversorgungssystem nach Anspruch 11, **dadurch gekennzeichnet, dass** bei jedem Tiefsetzsteller (7) eine weitere Tiefsetzstellerausgangsinduktivität (9) mit dem Verbindungspunkt des zweiten passiven nicht ansteuerbaren Leistungshalbleiterschalters mit unidirektionaler Stromführungsrichtung (S3) mit dem zweiten ansteuerbaren unidirektionalen Leistungshalbleiterschalter mit gesteuerter unidirektionaler Stromführungsrichtung (S4) verbunden ist.

14. Gleichstromversorgungssystem nach Anspruch 13, **dadurch gekennzeichnet, dass** die Tiefsetzsteller (7) der Umrichtereinheiten (3, 3.1, ...3.n, 4, 4.1, ...4.p) an den Tiefsetzstellerausgangsinduktivitäten (8) und an den weiteren Tiefsetzstellerinduktivitäten (9) parallel miteinander verbunden sind.

15. Gleichstromversorgungssystem nach Anspruch 11, **dadurch gekennzeichnet, dass** die Tiefsetzsteller (7) der Umrichtereinheiten (3, 3.1, ...3.n, 4, 4.1, ...4.p) an den Tiefsetzstellerausgangsinduktivitäten (8) mit den Verbindungspunkten der jeweiligen zweiten passiven nicht ansteuerbaren Leistungshalbleiterschalter mit unidirektionaler Stromführungsrichtung (S3) mit den zweiten ansteuerbaren unidirektionalen Leistungshalbleiterschaltern mit gesteuerter unidirektionaler Stromführungsrichtung (S4) seriell miteinander verbunden sind.

16. Gleichstromversorgungssystem nach Anspruch 13, **dadurch gekennzeichnet, dass** die Tiefsetzsteller (7) der Umrichtereinheiten (3, 3.1, ...3.n, 4, 4.1, ...4.p) an den Tiefsetzstellerausgangsinduktivitäten (8) und an den weiteren Tiefsetzstellerinduktivitäten (9) seriell miteinander verbunden sind.
